# EUROPEAN PATENT SPECIFICATION

(11) **EP 3 782 872 B1**
(45) Date of publication and mention of the grant of the patent: **08.07.2026**
(21) Application number: 19380016.6
(22) Date of filing: 19.08.2019
(51) Int. Cl.: B61L 25/02, G01S 19/11

(54) **SYSTEM AND METHOD FOR ENABLING A POSITION DETERMINATION OF A VEHICLE IN A TUNNEL**
SYSTEM UND VERFAHREN ZUR ERMÖGLICHUNG EINER POSITIONSBESTIMMUNG EINES FAHRZEUGS IN EINEM TUNNEL
SYSTÈME ET PROCÉDÉ D'ACTIVATION DE LA DÉTERMINATION DE POSITION D'UN VÉHICULE DANS UN TUNNEL

(43) Date of publication of application: 24.02.2021
(73) Proprietor: Siemens Rail Automation S.A.U., 28760 Tres Cantos (Madrid) (ES)
(72) Inventor: ANDRES ALONSO, Alberto, E-19003 Guadalajara (ES)
(74) Representative: Siemens Patent Attorneys

(56) References cited:
- US-A1- 2006 071 852
- US-A1- 2012 326 924
- US-A1- 2013 207 840

## Description

The present invention concerns a system and a method for determining the position of a vehicle in a tunnel. The present invention concerns more particularly the field of railway and railway vehicles moving within a tunnel.

The present invention is essentially related to the localization of a vehicle, and preferentially of a guided vehicle, within a tunnel. The expression "guided vehicle" refers to public transport means such as subways, trains or train subunits, etc., as well as load transporting means such as, for example, freight trains, for which safety is a very important factor and which are guided along a route or railway by at least one rail, in particular by two rails.

Identifying the precise position of a vehicle within a tunnel is still problematic nowadays. Most of the vehicles use a Global Positioning System, hereafter GPS, for determining its position on the way. GPS are well known systems and do not need to be further described here. As it is known by GPS users, the GPS signal gets lost in tunnel environment, rendering the determination of the position of the vehicle either not possible or less precise from the instant the vehicle enters the tunnel until exiting the tunnel.

In order to enable a determination of the position of a vehicle in a tunnel, various solutions have been proposed. For instance, Bluetooth balises, GPS repeaters with external antennas, Wi-Fi transmitters, ultrasound systems, infrared devices, etc., enable a guided vehicle to further determine its position within the tunnel. Unfortunately, such solutions either lose precision in the tunnel or require hardware modification or additional hardware like external antennas or other special equipment in order to make it possible to determine the vehicle position within the tunnel. For instance, document US 2012/326924 A1 describes a system wherein fixed GPS antennas/receivers are placed at critical locations outside a tunnel in full view of navigation satellites, and signals acquired by the GPS antennas/receivers are then retransmitted via fiber to GPS signal transmitters within a specified location inside the tunnel. However, such a solution requires an additional detection system for making the positioning inside the tunnel more precise. The document US 2006/071852 A1 proposes a technique for retransmitting inside a building a GPS signal acquired on the roof of said building.

An objective of the present invention is to propose a new system and method for determining the position of a vehicle within a tunnel that have a very simple implementation with respect to a vehicle comprising a GPS system, requiring in particular no additional hardware or modification for said vehicle, that is cost efficient, notably in terms of infrastructure and maintenance.

For achieving said objective, the present invention proposes notably a system and method as disclosed by the objects of independent claims. Other advantages of the invention are presented in the dependent claims.

The system according to the invention is configured for providing a processed GPS signal within a tunnel, wherein the processed GPS signal is configured for enabling the determination of the position of a vehicle within the tunnel by means of a GPS system installed on-board the vehicle. The present system is based on a GPS technique that does not require any modification of the GPS system currently installed on-board the vehicle.

The system according to the invention comprises:
- a GPS transmitter system configured for being installed within the tunnel, said GPS transmitter system comprising one or several GPS transmitters, each of them configured for being installed at a specific location within the tunnel, wherein each GPS transmitter is configured for emitting at said specific location within the tunnel a processed GPS signal (which is actually different from the processed GPS signal of another GPS transmitter), wherein the processed GPS signal emitted by each GPS transmitter is a replication of the GPS signal that would be received by a GPS receiver of a vehicle at this specific location if there was no obstacle between the GPS receiver at said specific location and a GPS transmitting satellite emitting said GPS signal, i.e. if there was an unobstructed line of sight from said specific location where a GPS receiver could be located to several GPS transmitting satellites. In other words, each GPS transmitter according to the invention is configured for reproducing, inside the tunnel, at said specific location and notably in function of the time (i.e. in function of GPS transmitting satellites that are currently - i.e. at the time a vehicle is entering or within the tunnel - in line of sight of the position at the vertical of the specific location of the GPs transmitter), the GPS signal that would be received by a vehicle GPS receiver if there was no tunnel, i.e. no obstacle that would prevent a direct reception of the GPS signal transmitted by the GPS transmitting satellite at said specific location. This provides a clear advantage over existing techniques since, when entering a tunnel, the GPS receiver of a vehicle will simply continue to receive a GPS signal that enables to determine its position within the tunnel as it would do outside of the tunnel. The GPS signal is therefore not lost inside the tunnel. In particular, the frequency band of the GPS signal emitted by the transmitter(s) inside the tunnel is the same as the frequency band of the GPS signal that would be received outside the tunnel, so that no hardware/software adaptation of a vehicle GPS receiver is required;
- a processing unit, e.g. a processor or multiprocessor, for instance comprised within the GPS transmitter, e.g. each GPS transmitter being equipped with a processing unit, wherein the processing unit is configured for automatically processing GPS data of an external GPS signal, said data being for instance stored in a memory of the GPS transmitter, wherein for each GPS transmitter installed at a specific location within a tunnel, said GPS data of the external GPS signal are the data of a GPS signal that has been recorded at a point or position on the earth surface at the vertical of the specific location (i.e. same horizontal position as the specific location, e.g. same latitude and longitude, but different elevation, the difference in elevation corresponding to the depth of the tunnel at the specific location). In other words, the distance between said point on the earth surface and the specific location is a measure of the depth of the tunnel at said specific location with respect to the earth surface. The processing of said GPS data of the external GPS signal by means of the processing unit results in said processed GPS signal that reproduces the GPS signal that would be received by a GPS receiver at said specific location if the elevation of said specific location corresponded to the earth surface (i.e. if said specific location was on the earth surface, i.e. in an unobstructed line of sight with GPS transmitting satellites). The processing unit of the transmitter is thus configured for generating said processed GPS signal from the processed GPS data, the GPS transmitter transmitting then the processed signal within the tunnel at said specific location;
- a controller configured for broadcasting the acquired external GPS signals within all GPS transmitters by means of a broadcast message encoding for each acquired external GPS signal, the position wherein the external GPS signal has been acquired;
the system being characterized in that it further comprises a vehicle detection system for determining a set of GPS data to be used for generating the processed GPS signal, said vehicle detection system comprising a first sensor and a second sensor configured for being respectively located at a first end and at a second end of the tunnel, wherein the sensors are connected to the controller in order to determine whether a vehicle is entering or leaving the tunnel, the controller being configured for, when the controller determines that a vehicle is entering the tunnel, triggering an automatic switching on of the GPS transmitters and when the controller determines that the vehicle is leaving the tunnel, triggering an automatic switching off of said GPS transmitters.

The present invention also concerns a method for providing a processed GPS signal within a tunnel in order to enable a GPS system installed on-board a vehicle to determine the position of said vehicle within the tunnel, said method comprising the following steps:
- for each GPS transmitter installed within the tunnel at a specific location characterized by a latitude, longitude and elevation, acquiring a GPS signal at a position characterized by said latitude and said longitude on the earth surface, and recording corresponding GPS data for the GPS signal acquired, preferentially for all GPS transmitting satellites that are periodically in an unobstructed line of sight of said position characterized by said latitude and longitude on the earth surface;
- processing the GPS data of each GPS signal acquired on the earth surface in order to generate by means of the GPS transmitter said processed GPS signal, wherein the processed GPS signal reproduces the GPS signal that would be received by a GPS receiver in function of the time at said specific location from a GPS transmitting satellite if the earth surface was characterized by said elevation at said specific location, wherein a controller broadcasts the acquired GPS signals within all GPS transmitters by means of a broadcast message encoding for each acquired external GPS signal, the position wherein the external GPS signal has been acquired;
- transmitting by means of the GPS transmitter said processed GPS signal inside the tunnel at said specific location;
the method being characterized in that a vehicle detection system is used for determining a set of GPS data to be used for generating the processed GPS signal, wherein the vehicle detection system comprises a first sensor and a second sensor respectively located at a first end and at a second end of the tunnel, wherein the sensors are connected to said controller in order to determine whether a vehicle is entering or leaving the tunnel, wherein when the controller determines that the vehicle is entering the tunnel, then automatically triggering a switching on of the GPS transmitters, and when the controller determines that the vehicle is leaving the tunnel, then triggering an automatic switching off of said GPS transmitters.

Further aspects of the present invention will be better understood through the following drawings, wherein like numerals are used for like and corresponding parts:
- Figure 1: schematic representation of a system according to the invention.
- Figure 2: flowchart of a preferred method according to the invention.

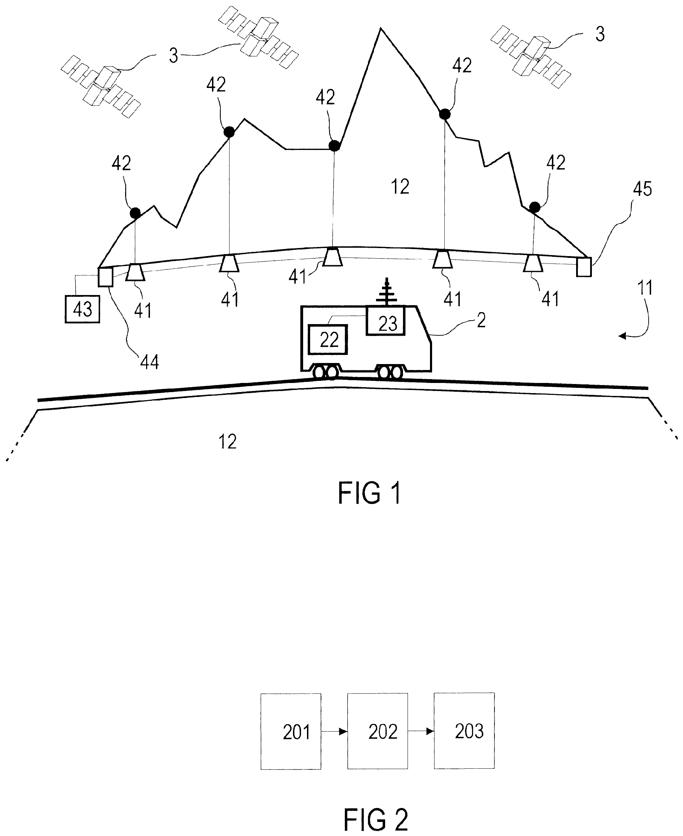

Figure 1 illustrates a preferred embodiment of a system according to the invention configured for providing a processed GPS signal inside a tunnel 11 dug into a mountain 12. The tunnel 11 is shown according to a longitudinal cross-section. A vehicle 2, e.g. a train, is schematically represented moving inside the tunnel 11, e.g. on a track installed on the tunnel floor. The system according to the invention is configured for enabling a GPS system 22 of the vehicle 2 determining the position of the vehicle 2 from processing a GPS signal received by its GPS receiver 23. The position provides notably the geographic coordinates of the vehicle 2, e.g. of its GPS receiver 23. The system according to the invention enables therefore a real-time geolocation within the tunnel 11 of the vehicle 2 equipped with the GPS system 22. It uses previously recorded GPS signals sent by GPS transmitting satellites 3 to create inside the tunnel 11 a processed GPS signal which enables the GPS system 22 of the vehicle 2 to continuously determine the position of the latter as if it was moving on the earth surface in an unobstructed line of sight of the GPS transmitting satellites 3.

For this purpose, the system according to the invention comprises a GPS transmitter system made of one or several GPS transmitters 41 configured for being each installed at a specific location within the tunnel, e.g. at a specific location on a wall or on the ceiling of the tunnel. Each specific location within the tunnel is characterized by a longitude, latitude, and elevation, i.e. typically geographic coordinates, that enable to exactly locate each GPS transmitter 41 of the GPS transmitter system. Each GPS transmitter 41 is configured for reproducing at said specific location and in function of the time the GPS signal that would be received by the GPS receiver 23 if there was an unobstructed line of sight between the GPS transmitter 41 at said specific location and the GPS transmitting satellites 3. In order to achieve such a result, the present invention proposes the following method schematically described by the flowchart of Figure 2:
At step 201, one or several GPS signals are acquired for each GPS transmitter 41 at a position 42 on the earth surface, wherein such a position 42 is defined for each GPS transmitter 41 equipping the tunnel. For each GPS transmitter 41, the position 42 is defined by a latitude and a longitude on the earth surface that are the same as the latitude and longitude of the specific location of the considered GPS transmitter 41. In other words, for each GPS transmitter 41, the position 42 is vertically above its specific location, i.e. only the elevation differs while latitude and longitude remain the same. The GPS signals acquired at the position 42 are directly received from one or several GPS transmitting satellites 3 due to an unobstructed line of view between the position 42 and the GPS transmitting satellites 3. Acquiring the GPS signals at each of said positions 42 comprises recording, for each of said positions 42, for instance in a memory or database of the system according to the invention, corresponding GPS data, notably for all GPS transmitting satellites 3 that are periodically in an unobstructed line of sight of the considered position 42. Each GPS signal might be acquired by one or several GPS signal receivers, for instance by installing at each of said positions 42 a GPS signal receiver so that each GPS transmitter has a corresponding GPS signal receiver on the earth surface, or by using a single GPS signal receiver equipping a moving system, like a drone, capable of moving, preferentially automatically, from one of said positions 42 to another one, in order to record in a. memory of the moving system and for each of the positions 42 the GPS signals that is notably received from all GPS transmitting satellites 3 that are periodically in line of sight of the position 42. The moving system is, or said one or several GPS signal receivers are, preferentially configured for then automatically uploading the recorded GPS signals in a memory or database, e.g. in a memory or database of a controller 43 of the system according to the invention. Additionally, said moving system or said one or several GPS receivers might be configured for periodically automatically updating the previously acquired GPS data by proceeding to new acquisitions of said GPS signals.

According to known techniques, each GPS transmitting satellite 3 is configured for continuously broadcasting at at least one predefined frequency a GPS signal which comprises a navigation message. The navigation message comprises said GPS data. Among said GPS data, there are:
- a clock, indicating the date and time of a GPS transmitting satellite;
- the ephemeris, i.e. the exact orbit of the GPS transmitting satellite which enables to know the exact position of the GPS transmitting satellite 3 in function of the time;
- an almanac comprising a coarse orbit and status for up to 32 GPS transmitting satellites 3 and data related to error correction.

Typically, a known in the art GPS receiver such as the GPS receiver 23 equipping the vehicle 2 is configured for processing the GPS signal, i.e. said navigation message, in order to determine from said clock and said ephemeris the time at which the navigation message has started to be transmitted (i.e. a transmission time) and the position of the satellite at this transmission time. Knowing the time of reception of each GPS signal sent by different GPS transmitting satellites 3, and knowing the travelling speed of the GPS signal, then the GPS system 22 is able to determine the position of the vehicle 22. This technique is known in the art and does not need further explanations.

At step 202, for each GPS transmitter 41, a processing unit of the latter processes each GPS signal previously acquired at said position 42 on the earth surface with same latitude and longitude as the specific location where the transmitter 41 is installed within the tunnel. For instance, the acquired GPS signals might be uploaded, e.g. automatically uploaded, in said memory or database, which is for instance a central memory or database connected to all GPS transmitters 42. The controller 43 may for instance be configured for broadcasting the acquired or uploaded GPS signals within all GPS transmitters by means of a broadcast message, wherein the broadcast message encodes for each acquired GPS signal, the position 42 wherein the GPS signal has been acquired so that each GPS transmitter 41 is able to determine which GPS signal within the broadcast message is the one that has been acquired at the position 42 with same latitude and longitude as its specific location. According to another embodiment, the uploaded GPS signals might be automatically classified in said memory or database by the controller 43, wherein said classification may encode the position 42 at which a GPS signal has been acquired, and each GPS transmitter 41 is then configured for automatically uploading any GPS signal that has been acquired at the position 42 located above its specific location, e.g. from the knowledge of a classification code. Of course, other ways of transmitting the acquired GPS signals to the correct GPS transmitter 41 exist, as for instance directly connecting a GPS signal receiver installed at position 42 with the GPS transmitter 41 located below said position 42 while having the same latitude and longitude. The final goal is that any GPS signal acquired on the earth surface is transmitted to the right GPS transmitter 41 for further processing.

According to the present invention, at each of said positions 42, a GPS signal is acquired preferentially for each GPS transmitting satellite 3 that is periodically in an unobstructed line of sight with the considered position 42. For each of such GPS transmitting satellites, GPS data comprising the clock, i.e. a temporal data, are therefore recorded in a memory of the system according to the invention. Then, the system is configured for determining, e.g. from a vehicle detection system, the time at which a vehicle is going to enter the tunnel (and/or optionally the time at which the vehicle will be within a predefined distance from a GPS transmitter 41), and for this determined time, the system is configured for determining, e.g. from the almanac, a list of GPS transmitting satellites that are in an unobstructed line of sight with respect to the position 42, and for each of said GPS transmitting satellites of the list, or for at least 4 of them, the system is configured for creating said processed GPS signal, notably by replacing said clock of the GPS data of the acquired GPS signal by a new clock as described below.

According to the present invention, the processing unit of each GPS transmitter 41 is configured for generating from the GPS signals acquired at the position 42, preferentially for all or a part of the GPS transmitting satellites that are in line of sight of the position 42 at a time T when a vehicle enters the tunnel, wherein said position 42 is characterized by a same latitude and longitude as the GPS transmitter specific location, but different elevation (since located on the earth surface), a processed GPS signal. Said processed GPS signal is therefore preferentially a function of the time T at which a vehicle enters the tunnel: depending on the time a vehicle will enter the tunnel, different GPS transmitting satellites will be available in the sky above the position 42. In function of the set of GPS transmitting satellites that are in an unobstructed line of sight of a position 42 at said time T, the system automatically selects a set of the previously acquired GPS data corresponding to the GPS signals that have been previously sent and recorded from each or a part of the GPS transmitting satellites that are comprised within said set at time T. Said selection might be determined by the processing unit from information taken from the almanac, which enables to determine which GPS transmitting satellite are available at a specific position 42 at a specific time T. By this way, the processed GPS signal is generated from GPS data that were previously recorded for the GPS transmitting satellites that are currently, i.e. at said time T, in an unobstructed line of sight with respect to a considered position 42, enabling therefore said vehicle to keep working with the same GPS transmitting satellites inside the tunnel as those it was working with outside the tunnel. Said processed GPS signal is therefore configured for reproducing, preferentially in function of the time (e.g. said time T), or otherwise said in function of the GPS transmitting satellites 3 that are currently in line of sight of the position 42 at said time T, the GPS signal that would be received by the GPS receiver 23 at said specific location if there was an unobstructed line of sight up to the GPS transmitting satellites 3 at said time T.

According to the present invention, the processing unit is configured for automatically correcting the clock of the acquired GPS data, i.e. of the navigation message by the new clock. In particular, said correction of the clock takes place, for at least, or preferentially for only, a set of said acquired GPS data (i.e. of navigation messages), wherein said set is defined by choosing, e.g. in the memory, only GPS data from GPS transmitting satellites that are currently in line of sight at the time T at which the vehicle enters the tunnel. Preferably, the processing unit according to the invention uses the almanac for determining, in function of the time T, the set of GPS transmitting satellites that are above a position 42, and therefore the set of GPS data that shall be used for creating the processed GPS signal. Optionally, the processing unit might also correct the ephemeris, or keep said ephemeris of the navigation message unchanged in the processed GPS signal. The processing unit of each GPS transmitter is notably configured for performing the following clock correction, notably with respect to each GPS data of said set of GPS data that has been previously determined: The clock (i.e. time) of the acquired GPS signal is replaced by a new clock by the processing unit, said new clock being the current time provided for instance by a clock of the GPS transmitter system according to the invention to which two offsets are subtracted. The new clock becomes the clock data of the processed GPS signal, i.e. of the navigation message that will be provided by the GPS transmitter 41 inside the tunnel. More precisely, in order to obtain said new clock, the processing unit is configured for subtracting from the current time said two offsets, namely a first offset which is the time difference between the transmission time and the time at which the GPS signal was received by the GPS signal receiver at the position 42 located above the specific location of the considered GPS transmitter 41, and a second offset which is the time that would be needed for the GPS signal to travel from the position 42 to the specific location of the GPS transmitter 41. This second offset is calculated by the processing unit from the knowledge of the travelling speed of the GPS signals and from the difference in elevation between the specific location of the GPS transmitter 41 and its corresponding position 42 located above the specific location (i.e. the vertical distance separating the GPS transmitter from the earth surface at position 42). Preferentially, the processing unit is connected to an NTP server in order to get UTC time as current time. Optionally, the GPS transmitter 41 or the controller 43 may comprise a radio controlled clock, synchronized for instance with an atomic clock, in order to get an accurate current time for determining said new clock.

After the previously described clock correction, the processing unit generates, notably for each or at least a part of the GPS transmitting satellites that are currently in line of sight from the position 42, said processed GPS signal. The latter comprises, like GPS signals generated by the GPS transmitting satellites, a navigation message, wherein the clock is said previously calculated new clock. In other words, the clock of the previously acquired GPS signal that are used for determining the processed GPS signal has been corrected (or updated) for taking account of the depth of the tunnel and of any delay between the time at which the GPS signal was acquired (and recorded) and the time at which the processed GPS signal is going to be generated (i.e. at the time T when a vehicle is going to enter the tunnel). Preferentially, when considering the GPS data acquired from one specific GPS transmitting satellite, apart from the clock, the other GPS data remain unchanged, the processing unit generating a processed GPS signal with respect to said specific GPS transmitting satellite comprising the new clock, and the ephemeris and almanac of the previously recorded GPS data for said specific GPS transmitting satellite..

At step 203, the GPS transmitter broadcasts said signal within the tunnel at said specific location. Advantageously, the broadcasting frequencies used by the system according to the invention are the same as those used by the GPS transmitting satellites 3, so that the GPS system 22 of the vehicle 2 does not require any software or hardware adaptation for receiving and processing the processed GPS signal broadcasted by each of the GPS transmitters of the tunnel 11.

The system according to the invention comprises a vehicle detection system used for determining a set of GPS data to be used for generating the processed GPS signal in function of the time at which the vehicle will enter the tunnel. Said vehicle detection system comprises sensors for detecting a vehicle 2 entering or respectively leaving the tunnel, a first sensor 44 and a second sensor 45, located respectively at a first end and at a second end of the tunnel, the first end and second end being different from each other, so that each end of the tunnel is equipped by said sensors, wherein the sensor is connected to the controller 43 in order to determine whether a vehicle is entering or leaving the tunnel, and wherein the entering of the tunnel by a sensor triggers an automatic launching of the system according to the invention (i.e. it automatically switches on the GPS transmitter system, so that each GPS transmitter 41 computes the processed GPS signal while taking into account the time at which the detection has been made, corresponding to the time T at which the vehicle is entering the tunnel, and starts broadcasting the processed GPS signal), while the detection of a vehicle leaving the tunnel preferentially triggers an automatic shut down of the system according to the invention(i.e. it automatically switches off the GPS transmitter system, so that each GPS transmitter 41 stops broadcasting the processed GPS signal). Advantageously, this claimed use of sensors enables to spare power consumption of the system according to the invention.

In conclusion, the present invention proposes a new way for determining the position of a vehicle within a tunnel which does not require any hardware or software modifications when considering vehicles comprising a GPS system, wherein the processed GPS signal is mutatis mutandis similar to GPS signals broadcasted by GPS transmitting satellites, said processed GPS signal being automatically determined by the processing unit of each transmitter, using for instance a configuration data file enabling to perform an automatic correction of the clock of navigation messages acquired on the earth so that the GPS system 22 of the vehicle 2 continuously determines the position of the vehicle as it was running on the earth surface in a direct view of the GPS transmitting satellites 23.

## Claims

1. System for providing a processed GPS signal enabling a vehicle moving within a tunnel to determine its position, the system comprising:
- one or several GPS transmitters (41) each configured for being installed at a specific location within the tunnel, wherein each GPS transmitter is configured for emitting such a processed GPS signal;
- a processing unit configured for automatically processing GPS data of an external GPS signal acquired for each GPS transmitter at a position (42) on the earth surface at the vertical of its specific location, wherein for each GPS transmitter (41), the processing of said GPS data of the external GPS signal by means of the processing unit resulting in said processed GPS signal, the latter being configured for reproducing the GPS signal that would be received by a GPS receiver of the vehicle moving within the tunnel at said specific location if there was an unobstructed line of sight between said specific location and GPS transmitting satellites (3);
- a controller (43) configured for broadcasting the acquired external GPS signals within all GPS transmitters (41) by means of a broadcast message encoding for each acquired external GPS signal, the position (42) wherein the external GPS signal has been acquired;
the system being **characterized in that** it further comprises a vehicle detection system for determining a set of GPS data to be used for generating the processed GPS signal, said vehicle detection system comprising a first sensor (44) and a second sensor (45) configured for being respectively located at a first end and at a second end of the tunnel, wherein the sensors are connected to the controller (43) in order to determine whether a vehicle is entering or leaving the tunnel, the controller being configured for, when the controller determines that a vehicle (2) is entering the tunnel, triggering an automatic switching on of the GPS transmitters (41) and when the controller determines that the vehicle (2) is leaving the tunnel, triggering an automatic switching off of said GPS transmitters (41).

2. System according to claim 1, wherein a memory comprises for each GPS transmitter (41) said GPS data for the external GPS signals of all GPS transmitting satellites that are periodically in an unobstructed line of sight with respect to said position (42) for the considered GPS transmitter (41).

3. System according to claim 1 or 2, wherein for each GPS transmitter (41), a GPS signal receiver is configured for being installed at the position (42) at the vertical of said specific location.

4. System according to claim 1 or 2, comprising a moving system equipped with a GPS signal receiver and capable of moving from one of said positions (42) to another one, in order to record in a memory of the moving system and for each of the positions (42) said external GPS signal.

5. System according to claim 3 or 4, wherein the processed GPS signal comprises a new clock, wherein said new clock is calculated by the processing unit by subtracting from a current time two offsets, namely a first offset which is the time difference between the transmission time and the time at which the external GPS signal was received by the GPS signal receiver at the position (42) located above the specific location of the considered GPS transmitter (41), and a second offset which is the time that would be needed for the external GPS signal to travel from the position (42) to the specific location of the GPS transmitter (41).

6. Method for providing a processed GPS signal enabling a vehicle moving within a tunnel to determine its position, the method comprising the steps:
- acquiring (201), for each GPS transmitter (41) installed within the tunnel at a specific location, an external GPS signal at a position (42) on the earth surface at the vertical of its specific location, and recording GPS data for each external GPS signal acquired;
- for each GPS transmitter (41), processing (202) the GPS data of at least a part of the acquired external GPS signals, and generating, from the processed GPS data, the processed GPS signal, the latter being **characterized in that** it reproduces the GPS signal that would be received by a GPS receiver of the vehicle moving within the tunnel at said specific location if there was an unobstructed line of sight between said specific location and GPS transmitting satellites (3), wherein a controller (43) broadcasts the acquired GPS signals within all GPS transmitters (41) by means of a broadcast message encoding for each acquired external GPS signal, the position (42) wherein the external GPS signal has been acquired;
- transmitting the processed GPS signal by each of said GPS transmitters (41);
the method being **characterized in that** a vehicle detection system is used for determining a set of GPS data to be used for generating the processed GPS signal, wherein the vehicle detection system comprises a first sensor (44) and a second sensor (45) respectively located at a first end and at a second end of the tunnel, wherein the sensors are connected to said controller (43) in order to determine whether a vehicle is entering or leaving the tunnel, wherein when the controller determines that the vehicle is entering the tunnel, then automatically triggering a switching on of the GPS transmitters (41), and when the controller determines that the vehicle is leaving the tunnel, then triggering an automatic switching off of said GPS transmitters (41).

7. Method according to claim 6, wherein GPS data are recorded for external GPS signals of all GPS transmitting satellites that are periodically in an unobstructed line of sight of said position (42).

8. Method according to claim 6 or 7, comprising automatically uploading the external GPS signals acquired at each of said positions (42).

9. Method according to one of the claims 6 to 8, wherein the processed GPS signal comprises a new clock, wherein said new clock is calculated by the processing unit by subtracting from a current time two offsets, namely a first offset which is the time difference between the transmission time and the time at which the external GPS signal was received by the GPS signal receiver at the position (42) located above the specific location of the considered GPS transmitter (41), and a second offset which is the time that would be needed for the external GPS signal to travel from the position (42) to the specific location of the GPS transmitter (41).

## Patentansprüche

1. System zum Bereitstellen eines verarbeiteten GPS-Signals, das es einem Fahrzeug, welches sich in einem Tunnel bewegt, ermöglicht, seine Position zu bestimmen, wobei das System Folgendes umfasst:
- einen oder mehrere GPS-Sender (41), die jeweils so konfiguriert sind, dass sie an einem bestimmten Standort im Tunnel installiert werden können, wobei jeder GPS-Sender so konfiguriert ist, dass er ein solches verarbeitetes GPS-Signal aussenden kann,
- eine Verarbeitungseinheit, die so konfiguriert ist, dass sie automatisch für jeden GPS-Sender an einer Position (42) auf der Erdoberfläche vertikal zu seinem bestimmten Standort erfasste GPS-Daten aus einem externen GPS-Signal verarbeitet, wobei das Verarbeiten der GPS-Daten aus dem externen GPS-Signal für jeden GPS-Sender (41) mithilfe der Verarbeitungseinheit das verarbeitete GPS-Signal ergibt, das so konfiguriert ist, dass es das GPS-Signal wiedergibt, das von einem GPS-Empfänger des Fahrzeugs an dem bestimmten Standort empfangen würde, welches sich im Tunnel bewegt, wenn es zwischen dem bestimmten Standort und GPS-Sendesatelliten (3) eine freie Sichtverbindung gäbe,
- eine Steuerung (43), die so konfiguriert ist, dass sie die erfassten externen GPS-Signale mithilfe einer Rundsendenachricht unter allen GPS-Sendern (41) rundsendet, welche die Position (42), an der das externe GPS-Signal erfasst wurde, für jedes erfasste externe GPS-Signal codiert,
wobei das System **dadurch gekennzeichnet ist, dass** es ferner ein Fahrzeugerkennungssystem zum Bestimmen eines Satzes GPS-Daten umfasst, die zum Erzeugen des verarbeiteten GPS-Signals verwendet werden sollen, wobei das Fahrzeugerkennungssystem einen ersten Sensor (44) und einen zweiten Sensor (45) umfasst, die so konfiguriert sind, dass sie sich an einem ersten beziehungsweise einem zweiten Ende des Tunnels befinden, wobei die Sensoren mit der Steuerung (43) verbunden sind, um zu bestimmen, ob ein Fahrzeug in den Tunnel hinein- oder aus diesem herausfährt, wobei die Steuerung so konfiguriert ist, dass sie, wenn sie bestimmt, dass ein Fahrzeug (2) in den Tunnel hineinfährt, ein automatisches Einschalten der GPS-Sender (41) bewirkt und, wenn sie bestimmt, dass ein Fahrzeug (2) aus dem Tunnel herausfährt, ein automatisches Ausschalten der GPS-Sender (41) bewirkt.

2. System nach Anspruch 1, wobei ein Speicher für jeden GPS-Sender (41) die GPS-Daten für die externen GPS-Signale aller GPS-Sendesatelliten umfasst, die sich in Bezug auf die Position (42) des entsprechenden GPS-Senders (41) regelmäßig in freier Sichtverbindung befinden.

3. System nach Anspruch 1 oder 2, wobei für jeden GPS-Sender (41) ein GPS-Signalempfänger so konfiguriert ist, dass er in der Position (42) vertikal zu dem bestimmten Standort installiert wird.

4. System nach Anspruch 1 oder 2, das ein bewegliches System umfasst, welches mit einem GPS-Signalempfänger ausgestattet und in der Lage ist, sich von einer der Positionen (42) zu einer anderen zu bewegen und in einem Speicher des beweglichen Systems für jede der Positionen (42) das externe GPS-Signal aufzuzeichnen.

5. System nach Anspruch 3 oder 4, wobei das verarbeitete GPS-Signal einen neuen Zeitgeber umfasst, wobei der neue Zeitgeber von der Verarbeitungseinheit durch Subtrahieren von zwei Verschiebungen von einer aktuellen Zeit berechnet wird, und zwar von einer ersten Verschiebung, bei der es sich um die Zeitdifferenz zwischen der Sendezeit und der Zeit handelt, zu der das externe GPS-Signal von dem GPS-Signalempfänger an der Position (42) oberhalb des bestimmten Standorts des entsprechenden GPS-Senders (41) empfangen wurde, und einer zweiten Verschiebung, bei der es sich um die Zeit handelt, die das externe GPS-Signal für den Weg von der Position (42) bis zu dem bestimmten Standort des GPS-Senders (41) benötigen würde.

6. Verfahren zum Bereitstellen eines verarbeiteten GPS-Signals, das es einem Fahrzeug, welches sich in einem Tunnel bewegt, ermöglicht, seine Position zu bestimmen, wobei das Verfahren folgende Schritte umfasst:
- Erfassen (201) eines externen GPS-Signals für jeden GPS-Sender (41), der in dem Tunnel an einem bestimmten Standort installiert ist, an einer Position (42) auf der Erdoberfläche vertikal zu seinem bestimmten Standort und Aufzeichnen von GPS-Daten für jedes erfasste externe GPS-Signal,
- Verarbeiten (202) der GPS-Daten von zumindest einem Teil der erfassten externen GPS-Signale für jeden GPS-Sender (41) und Erzeugen des verarbeiteten GPS-Signals aus den verarbeiteten GPS-Daten, wobei dieses **dadurch gekennzeichnet ist, dass** es das GPS-Signal wiedergibt, das von einem GPS-Empfänger des Fahrzeugs an dem bestimmten Standort empfangen würde, welches sich im Tunnel bewegt, wenn es zwischen dem bestimmten Standort und GPS-Sendesatelliten (3) eine freie Sichtverbindung gäbe, wobei eine Steuerung (43) die erfassten GPS-Signale mithilfe einer Rundsendenachricht unter allen GPS-Sendern (41) rundsendet, welche die Position (42), an der das externe GPS-Signal erfasst wurde, für jedes erfasste externe GPS-Signal codiert,
- Senden des verarbeiteten GPS-Signals durch jeden der GPS-Sender (41),
wobei das Verfahren **dadurch gekennzeichnet ist, dass** ein Fahrzeugerkennungssystem zum Bestimmen eines Satzes GPS-Daten verwendet wird, die zum Erzeugen des verarbeiteten GPS-Signals verwendet werden sollen, wobei das Fahrzeugerkennungssystem einen ersten Sensor (44) und einen zweiten Sensor (45) umfasst, die sich an einem ersten beziehungsweise einem zweiten Ende des Tunnels befinden, wobei die Sensoren mit der Steuerung (43) verbunden sind, um zu bestimmen, ob ein Fahrzeug in den Tunnel hinein- oder aus diesem herausfährt, wobei, wenn die Steuerung bestimmt, dass das Fahrzeug in den Tunnel hineinfährt, automatisch die GPS-Sender (41) eingeschaltet werden und, wenn die Steuerung bestimmt, dass das Fahrzeug aus dem Tunnel herausfährt, die GPS-Sender (41) automatisch ausgeschaltet werden.

7. Verfahren nach Anspruch 6, wobei GPS-Daten für externe GPS-Signale aller GPS-Sendesatelliten aufgezeichnet werden, die sich regelmäßig in freier Sichtverbindung mit der Position (42) befinden.

8. Verfahren nach Anspruch 6 oder 7, das ein automatisches Hochladen der externen GPS-Signale umfasst, die an jeder der Positionen (42) erfasst werden.

9. Verfahren nach einem der Ansprüche 6 bis 8, wobei das verarbeitete GPS-Signal einen neuen Zeitgeber umfasst, wobei der neue Zeitgeber von der Verarbeitungseinheit durch Subtrahieren von zwei Verschiebungen von einer aktuellen Zeit berechnet wird, und zwar von einer ersten Verschiebung, bei der es sich um die Zeitdifferenz zwischen der Sendezeit und der Zeit handelt, zu der das externe GPS-Signal von dem GPS-Signalempfänger an der Position (42) oberhalb des bestimmten Standorts des entsprechenden GPS-Senders (41) empfangen wurde, und einer zweiten Verschiebung, bei der es sich um die Zeit handelt, die das externe GPS-Signal für den Weg von der Position (42) bis zu dem bestimmten Standort des GPS-Senders (41) benötigen würde.

## Revendications

1. Système de fourniture d'un signal GPS traité permettant à un véhicule se déplaçant dans un tunnel de déterminer sa position, le système comprenant :
- un ou plusieurs émetteurs GPS (41), chacun étant configuré pour être installé à un emplacement spécifique dans le tunnel, dans lequel chaque émetteur GPS est configuré pour émettre un tel signal GPS traité ;
- une unité de traitement configurée pour traiter automatiquement des données GPS d'un signal GPS externe acquis, pour chaque émetteur GPS, à une position (42) sur la surface terrestre à la verticale de son emplacement spécifique, dans lequel, pour chaque metteur GPS (41), le traitement desdites données GPS du signal GPS externe au moyen de l'unité de traitement permettant d'obtenir ledit signal GPS traité, ce dernier étant configuré pour reproduire le signal GPS qui serait reçu par un récepteur GPS du véhicule se déplaçant dans le tunnel audit emplacement spécifique s'il existait une ligne de visée dégagée entre ledit emplacement spécifique et des satellites émetteurs GPS (3) ;
- une unité de commande (43) configurée pour diffuser les signaux GPS externes acquis dans tous les émetteurs GPS (41) au moyen d'un message de diffusion codant, pour chaque signal GPS externe acquis, la position (42) dans laquelle le signal GPS externe a été acquis ;
le système étant **caractérisé en ce qu'**il comprend en outre un système de détection de véhicule pour déterminer un ensemble de données GPS à utiliser pour générer le signal GPS traité, ledit système de détection de véhicule comprenant un premier capteur (44) et un second capteur (45) configurés pour être respectivement situés au niveau d'une première extrémité et au niveau d'une seconde extrémité du tunnel, dans lequel les capteurs sont reliés à l'unité de commande (43) afin de déterminer si un véhicule entre dans le tunnel ou en sort, l'unité de commande étant configurée pour, lorsque l'unité de commande détermine qu'un véhicule (2) entre dans le tunnel, déclencher une mise en marche automatique des émetteurs GPS (41) et, lorsque l'unité de commande détermine que le véhicule (2) sort du tunnel, déclencher une mise à l'arrêt automatique desdits émetteurs GPS (41).

2. Système selon la revendication 1, dans lequel une mémoire comprend, pour chaque émetteur GPS (41), lesdites données GPS relatives aux signaux GPS externes de tous les satellites émetteurs GPS qui sont périodiquement dans une ligne de visée dégagée par rapport à ladite position (42) pour l'émetteur GPS (41) considéré.

3. Système selon la revendication 1 ou 2, dans lequel, pour chaque émetteur GPS (41), un récepteur de signal GPS est configuré pour être installé à la position (42) à la verticale dudit emplacement spécifique.

4. Système selon la revendication 1 ou 2, comprenant un système mobile équipé d'un récepteur de signal GPS et capable de se déplacer d'une desdites positions (42) à une autre, afin d'enregistrer dans une mémoire du système mobile et pour chacune des positions (42) ledit signal GPS externe.

5. Système selon la revendication 3 ou 4, dans lequel le signal GPS traité comprend une nouvelle horloge, dans lequel ladite nouvelle horloge est calculée par l'unité de traitement en soustrayant d'une heure actuelle deux décalages, à savoir un premier décalage qui est la différence de temps entre l'instant d'émission et l'instant auquel le signal GPS externe a été reçu par le récepteur de signal GPS à la position (42) située au-dessus de l'emplacement spécifique de l'émetteur GPS (41) considéré, et un second décalage qui est le temps qui serait nécessaire au signal GPS externe pour arriver de la position (42) à l'emplacement spécifique de l'émetteur GPS (41).

6. Procédé de fourniture d'un signal GPS traité permettant à un véhicule se déplaçant dans un tunnel de déterminer sa position, le procédé comprenant les étapes de :
- acquisition (201), pour chaque émetteur GPS (41) installé dans le tunnel à un emplacement spécifique, d'un signal GPS externe à une position (42) sur la surface terrestre à la verticale de son emplacement spécifique, et enregistrement de données GPS pour chaque signal GPS externe acquis ;
- pour chaque émetteur GPS (41), traitement (202) des données GPS d'au moins une partie des signaux GPS externes acquis, et génération, à partir des données GPS traitées, du signal GPS traité, ce dernier étant **caractérisé en ce qu'**il reproduit le signal GPS qui serait reçu par un récepteur GPS du véhicule se déplaçant dans le tunnel audit emplacement spécifique s'il existait une ligne de visée dégagée entre ledit emplacement spécifique et des satellites émetteurs GPS (3), dans lequel une unité de commande (43) diffuse les signaux GPS acquis dans tous les émetteurs GPS (41) au moyen d'un message de diffusion codant, pour chaque signal GPS externe acquis, la position (42) dans laquelle le signal GPS externe a été acquis ;
- transmission du signal GPS traité par chacun desdits émetteurs GPS (41) ;
le procédé étant **caractérisé en ce qu'**un système de détection de véhicule est utilisé pour déterminer un ensemble de données GPS à utiliser pour générer le signal GPS traité, dans lequel le système de détection de véhicule comprend un premier capteur (44) et un second capteur (45) respectivement situés au niveau d'une première extrémité et au niveau d'une seconde extrémité du tunnel, dans lequel les capteurs sont reliés à ladite unité de commande (43) afin de déterminer si un véhicule entre dans le tunnel ou en sort, dans lequel, lorsque l'unité de commande détermine que le véhicule entre dans le tunnel, alors déclencher automatiquement une mise en marche des émetteurs GPS (41), et lorsque l'unité de commande détermine que le véhicule sort du tunnel, alors déclencher une mise à l'arrêt automatique desdits émetteurs GPS (41).

7. Procédé selon la revendication 6, dans lequel des données GPS sont enregistrées pour les signaux GPS externes de tous les satellites émetteurs GPS qui sont périodiquement dans une ligne de visée dégagée de ladite position (42).

8. Procédé selon la revendication 6 ou 7, comprenant le téléversement automatique des signaux GPS externes acquis à chacune desdites positions (42).

9. Procédé selon l'une des revendications 6 à 8, dans lequel le signal GPS traité comprend une nouvelle horloge, dans lequel ladite nouvelle horloge est calculée par l'unité de traitement en soustrayant d'une heure actuelle deux décalages, à savoir un premier décalage qui est la différence de temps entre l'instant d'émission et l'instant auquel le signal GPS externe a été reçu par le récepteur de signal GPS à la position (42) située au-dessus de l'emplacement spécifique de l'émetteur GPS (41) considéré, et un second décalage qui est le temps qui serait nécessaire au signal GPS externe pour arriver de la position (42) à l'emplacement spécifique de l'émetteur GPS (41).
